# EUROPEAN PATENT SPECIFICATION

(11) **EP 3 582 284 B1**
(45) Date of publication and mention of the grant of the patent: **12.11.2025**
(21) Application number: 19176856.3
(22) Date of filing: 28.05.2019
(51) Int. Cl.: H01M 50/209

(54) **RECHARGEABLE BATTERY AND BATTERY MODULE**
WIEDERAUFLADBARE BATTERIE UND BATTERIEMODUL
BATTERIE RECHARGEABLE ET MODULE DE BATTERIE

(30) Priority: 12.06.2018 KR 20180067515
(43) Date of publication of application: 18.12.2019
(73) Proprietor: Samsung SDI Co., Ltd., Gyeonggi-do 17084 (KR)
(72) Inventor: Park, Taewon, Yongin-si, Gyeonggi-do 17084 (KR); Baik, Yunki, Yongin-si, Gyeonggi-do 17084 (KR); Choi, Junmin, Yongin-si, Gyeonggi-do 17084 (KR)
(74) Representative: Gulde & Partner

(56) References cited:
- EP-A1- 2 388 846
- EP-A1- 2 445 032
- EP-A2- 2 362 465
- US-A1- 2013 065 100
- US-A1- 2016 079 578

## Description

### BACKGROUND OF THE INVENTION

### (a) Field of the Invention

The present invention relates to a rechargeable battery and a battery module, and more particularly, it relates to a rechargeable battery having a vent portion that emits a gas to the outside upon an increase of an internal pressure of a case, and a battery module.

### (b) Description of the Related Art

A rechargeable battery is a battery that repeatedly performs charging and discharging, differently from a primary battery. A rechargeable battery with small capacity is used in a small portable electronic device such as a mobile phone, a notebook computer, and a camcorder, and a rechargeable battery with large capacity may be used as a motor driving power source for a hybrid vehicle and an electric vehicle.

The rechargeable battery may be used as a single cell like the rechargeable battery in a small electronic device, or may be used in a module state in which a plurality of cells is electrically connected, like the rechargeable battery for driving a motor. That is, the battery module may include a bus bar that electrically connects the plurality of unit cells.

In the rechargeable battery, a cap plate is combined to an opening of a case that accommodates an electrode assembly, and the cap plate may include a vent portion that is ruptured by an internal pressure of the rechargeable battery and a vent hole is opened.

The rechargeable battery undergoes an abnormal phenomenon such as an internal temperature increase due to various causes, and as a result, an internal pressure may be increased by a gas generated due to a chemical reaction or the like. A unit cell in which an abnormal phenomenon occurs needs to discharge the gas through the vent portion and the like to solve the increase of the internal pressure, thereby preventing occurrence of a dangerous situation such as explosion and the like.

Further, when the unit cell where an abnormal phenomenon occurs is included in a battery module, it is important to maintain safety of the battery module by effectively discharging a leaked gas through a vent portion of the unit cell.

The above information disclosed in this Background section is only for enhancement of understanding of the background of the invention and therefore it may contain information that does not form the prior art that is already known in this country to a person of ordinary skill in the art.

EP 2 388 846 A1 discloses a secondary battery with a film unit that insulates a cap plate and prevents a foreign substance from being inserted into a safety vent.

EP 2 362 465 A2 discloses a rechargeable battery with an improved vent member.

### SUMMARY OF THE INVENTION

Exemplary embodiments of the present invention have been made in an effort to provide a rechargeable battery and a battery module that can effectively solve an increase of an internal pressure due to an abnormal phenomenon.

In addition, the exemplary embodiments of the present invention provide a rechargeable battery that can effectively suppress secondary damage such as deterioration due to a high-temperature gas generated due to the abnormal phenomenon by effectively discharging the gas.

A rechargeable battery according to an exemplary embodiment of the present invention includes: an electrode assembly that includes a first electrode, a second electrode, and a separator; a case where the electrode assembly is accommodated, and including one opened side; a cap plate that is combined to the one opened side of the case, and includes a plurality of vent portions that are ruptured by an internal pressure of the case, and an electrode terminal that protrudes from the cap plate and is electrically connected with the electrode assembly, wherein each vent portion comprises: a break portion in which a first notch that is ruptured by the internal pressure is formed; and a no-break portion that is connected with the break portion, and wherein the break portion is ruptured and a gas is discharged to a direction that faces toward the break portion from the no-break portion in each vent portion, wherein, in the vent portion, a gas discharge direction (G) that faces toward the break portion from the no-break portion is set to avoid the electrode terminal, wherein the electrode terminal is provided as a pair and respectively disposed at opposite ends of the cap plate, wherein the plurality of vent portions are disposed between the pair of electrode terminals and the gas discharge direction (G) that faces toward the break portion (164) from the no-break portion (162) is set to face a center of the cap plate in each vent portion, wherein the plurality of vent portions are provided as at least a pair and respectively disposed adjacent to the electrode terminals

A second notch that is straight-lined and connected with the first notch may be formed with a depth that is smaller than that of the first notch in the no-break portion, and, the second notch may become a rotation shaft of the break portion when the first notch is ruptured.

The electrode terminal is provided as a pair and respectively disposed at opposite ends of the cap plate, the plurality of vent portions may be disposed further away from a center of the cap plate than the pair of electrode terminals, and the gas discharge direction that faces toward the break portion from the mo-break portion may be set to face away from the electrode terminals.

A battery module according to an exemplary embodiment of the present invention includes: a plurality of rechargeable batteries as defined in the appended set of claims and a a vent line extending along an alignment direction of the plurality of rechargeable batteries, and into which a gas emitted from the plurality of vent portions is introduced .

Preferably, the vent line is disposed to pass through a center side of the cap plate.

According to the exemplary embodiments of the present invention, an increase of an internal pressure due to an abnormal phenomenon can be effectively solved.

In addition, a gas generated due to the abnormal phenomenon is effectively discharged to thereby effectively suppress a secondary damage due to a high-temperature gas.

### BRIEF DESCRIPTION OF THE DRAWINGS

FIG. 1 shows a rechargeable battery according to an exemplary embodiment.
FIG. 2 shows an internal cross-section of the rechargeable battery according to the exemplary embodiment.
FIG. 3 shows a comparison of an internal pressure change between a rechargeable battery provided with a single vent portion and a rechargeable battery provided with a plurality of vent portions.
FIG. 4(a) to (c) illustrate various exemplary embodiments of rechargeable batteries provided with a plurality of vent portions. The present invention is directed to an embodiment disclosed in Fig. 4(a).
FIG. 5 illustrates various exemplary embodiments of shapes of the vent portion of the rechargeable battery.
FIG. 6(a) to (c) illustrate various exemplary embodiments of gas discharge directions G in the vent portion of the rechargeable battery according to the present invention. The present invention is directed to an embodiment disclosed in Fig. 6(c).
FIG. 7 shows a battery module provided with one vent line according to an exemplary embodiment.
FIG. 8 shows a battery module provided with a plurality of vent lines according to an exemplary embodiment of the present invention.

### DETAILED DESCRIPTION OF THE EMBODIMENTS

In the following detailed description, only certain exemplary embodiments of the present invention have been shown and described, simply by way of illustration.

As those skilled in the art would realize, the described embodiments may be modified in various different ways, all without departing from the scope of the present invention, as defined in the claims. Accordingly, the drawings and description are to be regarded as illustrative in nature and not restrictive. Like reference numerals designate like elements throughout the specification.

In the present specification, an overlapped description for the same components will be omitted.

Further, in the present specification, it is to be understood that when one component is referred to as being 'connected to' another component, it may be connected directly to another component or be connected to another component with the other component interposed therebetween. On the other hand, in the present specification, it is to be understood that when one component is referred to as being 'directly connected to' another component, it may be connected to another component without the other component interposed therebetween.

In addition, terms used in the present specification are used only in order to describe specific exemplary embodiments rather than limiting the present invention.

Further, in the present specification, singular forms are intended to include plural forms unless the context clearly indicates otherwise.

It should be further understood that terms "include" or "have" used in the present specification specify the presence of features, numerals, steps, operations, components, parts mentioned in the present specification, or combinations thereof, but do not preclude the presence or addition of one or more other features, numerals, steps, operations, components, parts, or combinations thereof.

Further, in the present specification, a term 'and/or' includes a combination of a plurality of stated items or any one of the plurality of stated items. In the present specification, 'A or B' may include 'A', 'B', or 'both A and B'.

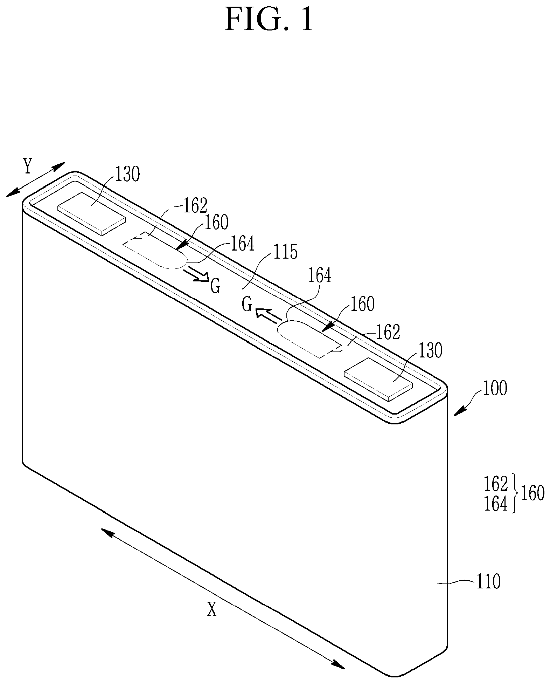

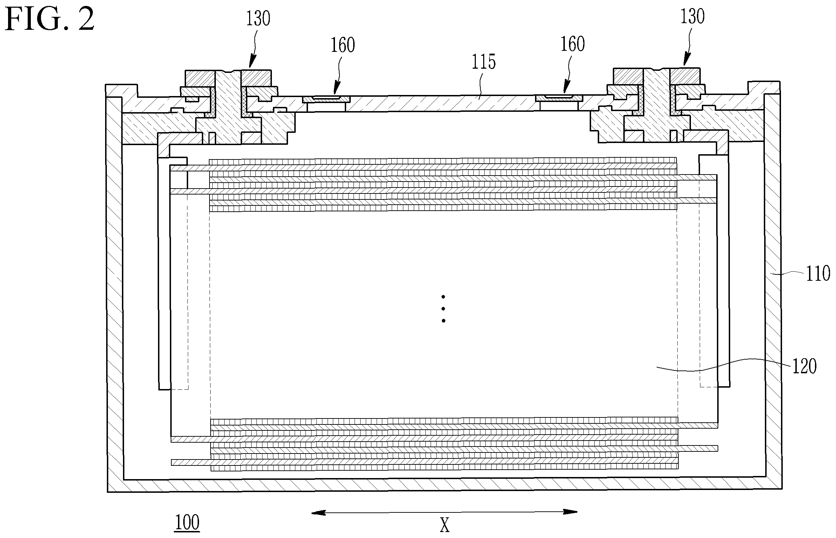

FIG. 1 illustrates a rechargeable battery 100 according to an exemplary embodiment of the present invention. The rechargeable battery 100 according to the exemplary embodiment of the present invention includes an electrode assembly 120 (see FIG. 2) that includes a first electrode, a second electrode, and a separator, a case 110 where the electrode assembly 120 is received and having one opened side, and a cap plate 115 that is combined to the opened side of the case 110 and includes a plurality of vent portions 160 opened by an internal pressure of the case 110, and the plurality of vent portions 160 are arranged along a length direction X of the cap plate 115. Further, electrode terminals 130 are provided as a pair and are disposed at opposite ends of the cap plate 115, as shown in Fig. 1.

FIG. 2 illustrates an internal cross-section of the rechargeable battery 100 according to the exemplary embodiment of the present invention. Referring to FIG. 1 to FIG. 2, the electrode assembly 120 includes a first electrode, a second electrode, and a separator, and the case 110 includes one opened side and the cap plate 115 is combined to the opened side.

The electrode assembly 120 is may be provided in various shapes such as a stacked shape of a spirally wound shape as necessary, and the case 110 may be formed in the shape of a cylinder or a quadrangular column. Hereinafter, for convenience of description of the present invention, as shown in FIG. 1 and FIG. 2, the case 110 will be exemplarily described as a quadrangular column having a rectangular cross-section.

The case 110 has one opened side, and the opened side may be a top surface, a side surface, or a bottom surface of the case 110, and in FIG. 1 and FIG. 2, the case 110 of which the top surface is opened is illustrated according to the exemplary embodiment of the present invention.

A space for receiving the electrode assembly 120 is provided in the case 110, and the electrode assembly 120 is inserted into the case 110 through the opened side of the case 110 and then the cap plate 115 is combined to the opened side of the case 110 to close and seal the inside of the case 110.

Meanwhile, in the rechargeable battery 100 according to the exemplary embodiment of the present invention, the plurality of vent portions 160 may be provided in the cap plate 115, and they can be opened when an internal pressure of the case 110 reaches a predetermined pressure and may be arranged along the length direction X of the cap plate 115.

The vent portions 160 may be provided with various shapes and through various methods. In FIG. 1 to FIG. 2, a vent portion 160 in which a notch is formed, which is ruptured when an internal pressure of the case 110 exceeds a predetermined pressure according to the exemplary embodiment of the present invention, is schematically illustrated.

In the case 110, the electrode assembly 120 electrochemically reacts with an electrolyte solution, and the chemical reaction may rapidly proceed in the inside of the rechargeable battery 100 due to an abnormal situation such as generation of a high temperature at the periphery thereof.

The rapid chemical reaction in the rechargeable battery 100 causes an increase of an internal temperature and generation of a large amount of gas, thereby causing an increase of internal pressure, and the increase of internal pressure of the case 110 can be effectively prevented by setting the vent portions 160 to be opened at a predetermined pressure.

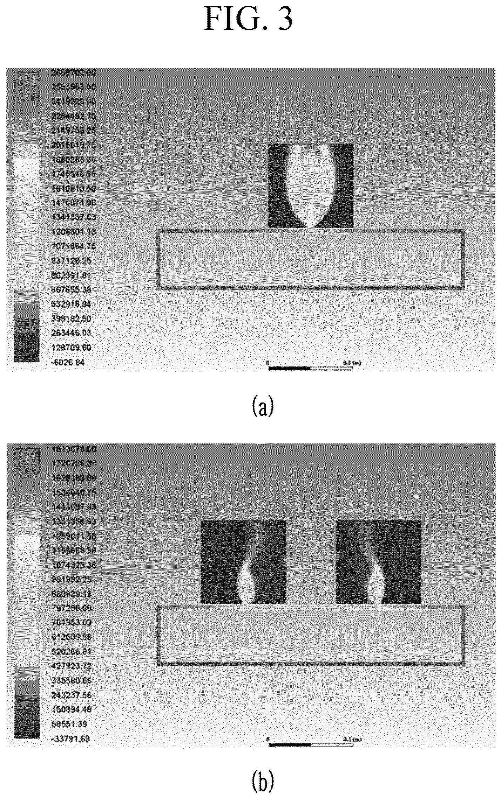

In FIG. 3, a case in which a single vent portion 160 is provided to solve internal pressure is illustrated in (a), and a case in which a plurality of vent portions 160 are provided to solve an internal pressure is illustrated in (b). (b) of FIG. 3 exemplarily illustrates a rechargeable battery 100 including two vent portions 160.

Referring to FIG. 3, compared to the rechargeable battery 100 including a single vent portion 160, the rechargeable battery 100 including a plurality of vent portions 160 can effectively solve the internal pressure problem. As described, according to the exemplary embodiment of the present invention, a plurality of vent portions 160 are provided to effectively solve the internal pressure of the rechargeable battery 100.

Meanwhile, in the exemplary embodiment of the present invention, the cap plate 115 and the case 110 respectively have the length direction X, and the plurality of vent portions 160 are arranged along the length direction of the cap plate 115. Accordingly, occurrence of a rupture due to an excessive increase of internal pressure at any side in the cap plate 115 that is combined to the case 110 by welding and the like can be effectively suppressed.

However, an arrangement structure of the vent portions 160 of the present invention is not limited thereto, and the number of vent portions 160 can be variously determined as necessary in consideration with the shape of the cap plate 115, and an internal pressure analysis result or capacity of the cap plate 115.

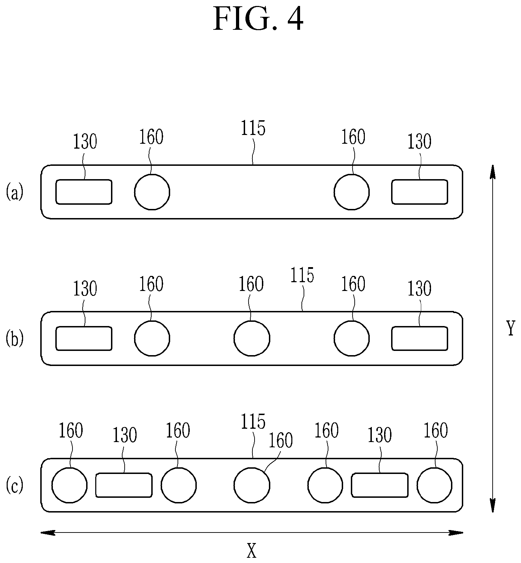

Meanwhile, in FIG. 4, various exemplary embodiments in which a plurality of vent portions 160 are provided are exemplarily illustrated. Specifically, (a) of FIG. 4 shows an exemplary embodiment in which two vent portions 160 are provided, (b) of FIG. 4 shows an exemplary embodiment in which three vent portions 160 are provided, and (c) of FIG. 4 shows an exemplary embodiment in which five vent portions 160 are provided.

In the respective exemplary embodiments of the present invention, at least one of the plurality of vent portions 160 may be disposed at opposite ends of the cap plate 115.

In the rechargeable battery where the cap plate 115 is combined to the opened one side of the case 110, when an internal pressure is increased due to gas generation, the pressure may be concentrated on each edge of the rechargeable battery 100, and particularly, the pressure may be concentrated to opposite ends of the cap plate 115 in which three edges meet each other and thus an apex is formed, such that it may be broken.

Further, when the gas generated due to the chemical reaction of the electrode assembly 120 is concentrated to the opposite ends of the length direction X of the cap plate 115 and the case 110 such as when the electrode assembly 120 is formed in the shape of a spiral and a spiral-wound shaft is provided in parallel with the length direction X of the cap plate 115, an internal pressure may be excessively increased at the opposite ends of the cap plate 115.

Referring back to FIG. 3, in both cases of (a) in which the single vent portion 160 is provided and (b) in which two vent portions 160 are provided, the internal pressure is excessively increased at opposite ends of the cap plate 115.

Accordingly, in the exemplary embodiment of the present invention, at least one vent portion 160 is provided at each of the opposite ends of the cap plate 115 to effectively reduce the internal pressure, which may be concentrated at the opposite ends of the cap plate 115.

In the rechargeable battery 100 according to the exemplary embodiment of the present invention, at least one of the plurality of vent portions 160 may be disposed at a center of the cap plate 115.

As shown in (b) or (c) of FIG. 4, the vent portions 160 may be provided at opposite ends of the cap plate 115, and may be further provided at a center of the cap plate 115.

Thus, in the rechargeable battery 100 according to the exemplary embodiment of the present invention, at least one vent portion 160 is provided in each of the opposite ends and the center portion of the cap plate 115, and thus the internal pressure of the case 110, which is increased due to an abnormal condition, can be effectively solved.

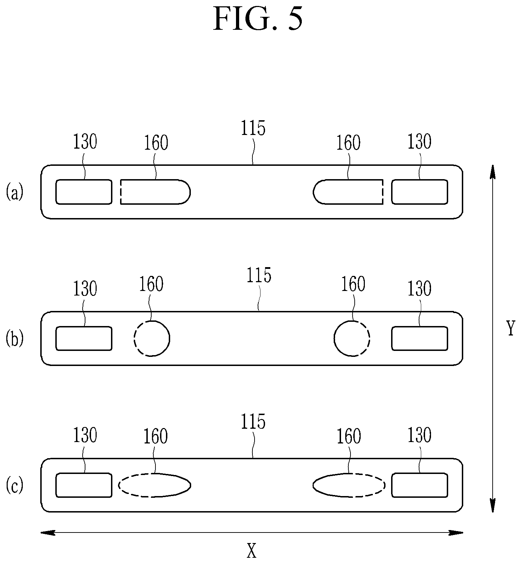

Meanwhile, FIG. 5 illustrates various exemplary embodiments of shapes of the vent portion 160 of the rechargeable battery 100 according to the present invention. In the exemplary embodiments shown in FIG. 5, a notch is formed in the vent portion 160 and the notch is ruptured and thus opened at a predetermined pressure.

Specifically, (a) of FIG. 5 shows a vent portion 160 in which a substantially arc-shaped notch is formed at one side thereof, (b) of FIG. 5 shows a vent portion 160 in which a substantially circular shaped notch is formed, and (c) of FIG. 5 shows a vent portion 160 in which a substantially oval shaped notch is formed.

In the exemplary embodiment of the present invention, the vent portion 160 includes a break portion 164 where a first notch that can be ruptured by the internal pressure is formed and a no-break portion 162 connected with the break portion 164, and when the break portion 164 is broken, a gas that flows toward the break portion 164 from the no-break portion 162 may be discharged.

In the vent portion 160, the break portion 164 where a first notch may be formed at one side and the no-break portion 162 that is not ruptured even at a predetermined pressure at which the first notch is ruptured may be provided at the other side.

In the vent portion 160, the first notch may be formed as a part of the cap plate 115 on the cap plate 115, and as shown in FIG. 2, the vent portion 160 may include vent holes formed on the cap plate 115 and a vent plate combined to the vent holes and where the first notch is formed

Such a structure of the vent portion 160 may vary as necessary.

Meanwhile, the predetermined pressure that causes the break portion 154 to be ruptured by the first notch may be determined by adjusting a depth or a width of the first notch, and the depth of the first notch may be set according to a position of the vent portion 160.

A second notch that is smaller than the first notch is depth and the like is provided in the no-break portion 162 and thus no rupture occurs at the predetermined pressure, or no notch is formed in the no-break portion 162 and thus the no-break portion 162 is not ruptured.

In the vent portions 160 of the various exemplary embodiments shown in FIG. 5, the solid line denotes the first notch that forms the break portion 164 and the dotted line implies that the second notch is formed or no notch is formed, and corresponds to the no-break portion 162.

In the exemplary embodiment of the present invention, the vent portion 160 is opened as the break portion 164 is ruptured due to an increase of internal pressure of the case 110, while the no-break portion 162 is not ruptured, such that the internal gas of the case 110 is discharged toward the break portion 164 from the no-break portion 162.

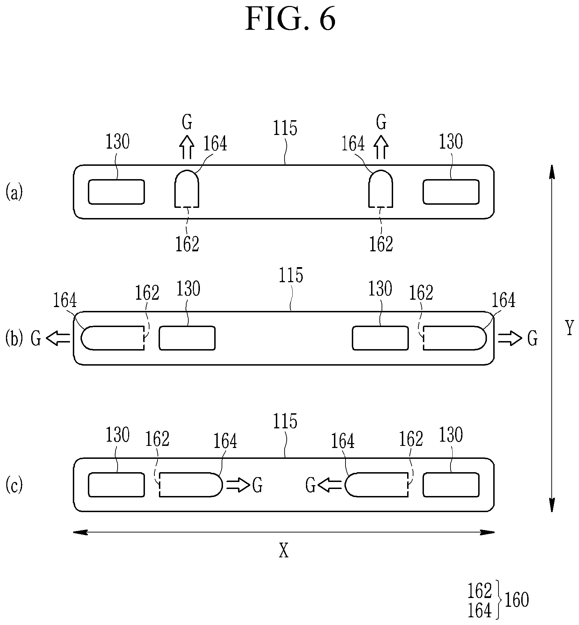

In FIG. 6, various exemplary embodiments of gas discharge directions G in the vent portion 160 are illustrated. According to the exemplary embodiment of the present invention, the no-break portion 162 and the break portion 164 are formed in the vent portion 160 such that the discharge direction G of the case can be variously set, thereby effectively discharging the gas discharged from the case 110 and preventing deterioration due to a high-temperature gas.

Meanwhile, in the exemplary embodiment of the present invention, a straight-lined second notch that is smaller than the first notch in depth and connected with the first notch is formed in the no-break portion 162, and the second notch may become a rotation shaft of the break portion 164 when the first notch is ruptured.

Depending on exemplary embodiments of the present invention, the dotted line portion of the vent portion 160 shown in FIG. 5 and FIG. 6 may correspond to the second notch and may form the no-break portion 162. As previously described, the second notch is not ruptured even at the predetermined pressure at which the first notch is ruptured, and thus the second notch may function as a rotation shaft of the break portion 164 when the break portion 164 is opened.

A straight-lined second notch is formed in the no-break portion 162, and preferably, the second notch extends in a length direction that is perpendicular to the gas discharge direction G such that the second notch functions as a rotation shaft for the break portion 164 when the break portion 164 is opened.

Compared to a case in which no notch is formed, the second notch is formed in the no-break portion 162 and thus a plate portion of the break portion 164 according to opening of the break portion 164 can be more easily rotated, and accordingly, the gas discharge direction G can be effectively set and the vent portion 160 can be effectively opened.

Referring to FIG. 6, (a) of FIG. 6 is an exemplary embodiment in which the gas discharge direction G of the vent portion 160 is set to be parallel with a width direction Y of the cap plate 115, (b) of FIG. 6 is an exemplary embodiment in which the gas discharge direction G of the vent portion 160 is parallel with the length direction X of the cap plate 115 and faces toward an outer side of the cap plate 115, and (c) of FIG. 6 is an exemplary embodiment in which the gas discharge direction G of the vent portion 160 is parallel with the length direction X of the cap plate 115 and faces toward a center side of the cap plate 115.

As shown in FIG. 6, according to the exemplary embodiment of the present invention, electrode terminals 130 that are formed while protruding from the cap plate 11 are electrically connected with the electrode assembly 120, and in the vent portion 160, a direction that faces toward the break portion 164 from the no-break portion 162 may be set to avoid the electrode terminals 130.

(a) to (c) of FIG. 6 correspond to various exemplary embodiments in which the gas discharge direction G of the vent portion 160 is set to avoid the electrode terminals 130. The electrode terminal 130 may be disposed on the cap plate 115, and may be electrically connected with the electrode assembly 120 in the case 120.

Meanwhile, when an internal pressure of the rechargeable battery 100 is increased due to an abnormal situation and thus the vent portions 160 are opened, a gas discharged from the vent portions 160 increases a temperature such that elements that contact the gas may be deteriorated due to the high-temperature gas.

The electrode terminals 130 may be formed on the cap plate 115 to protrude therefrom, and according to the exemplary embodiment of the present invention, the gas discharge directions G of the vent portions 160 are set to avoid the electrode terminals 130, thereby preventing deterioration of the terminal electrodes 130.

The gas discharge direction G which avoids the electrode terminals 130 may vary, and as shown in the various exemplary embodiments of FIG. 6, the gas discharge direction G may be set toward a side direction of the cap plate 115, toward an outer side direction among the length direction X, toward a center direction among the length direction X, or to a diagonal direction depending on a position of the correction vent portion 160 and a position of an adjacent electrode terminal 130.

In the exemplary embodiment of the present invention, as shown in (c) of FIG. 6, the electrode terminals 130 are disposed as a pair and respectively disposed at opposite ends of the cap plate 115, the plurality of vent portions 160 are disposed between the pair of electrode terminals 130, and a direction of each of the vent portions 160, facing toward the break portion 164 from the no-break portion 162, may be set toward a center of the cap plate 115.

Specifically, the electrode terminals 130 are provided as a pair and thus may be respectively disposed at opposite ends of the cap plate 115, at least a part of the vent portion 160 may be disposed closer to the center of the cap plate 115 than the electrode terminal 130 while being disposed close to each electrode terminal 130.

In the exemplary embodiment of the present invention, in the vent portion 160, as shown in (c) of FIG. 6, the no-break portion 162 is disposed to face the electrode terminal 130 and the break portion 164 is disposed to face toward the center side of the cap plate 115.

Accordingly, the gas discharge direction G of the vent portion 160 is set toward the center side of the cap plate 115 while being parallel with the length direction X of the cap plate 115. That is, the gas discharge direction G in the vent portion 160 that is disposed closer to the center of the cap plate 115 than the electrode terminal 130 is set toward the opposite side of the electrode terminal 130 such that a high-temperature gas is disposed while avoiding the electrode terminals 130, thereby preventing deterioration of the electrode terminals 130.

Further, since all the gas discharged from the plurality of vent portions 160 is discharged to the center side of the cap plate 115, it is easy to move and discharge the gas to the outside of the battery module 200, and this will be described in detail later.

In another exemplary embodiment of the present invention, as shown in (b) of FIG. 6, the electrode terminal 130 is provided as a pair and thus is respectively provided at opposite ends of the cap plate 115, the plurality of vent portions 160 are disposed further away from the center of the cap plate 115 than the pair of electrode terminals 130, and a direction that faces toward the no-break portion 162 from the break portion 164 may be set to face toward the center of the cap plate 115.

Specifically, the plurality of vent portions 160 may be provided as at least a pair, may be respectively disposed adjacent to the electrode terminals 130 at opposite ends of the cap plate, and may be disposed further away from the center of the cap plate 115 than the electrode terminal 130. That is, the plurality of vent portions 160 may be disposed further outer than the pair of electrode terminals 130 with reference to the length direction X of the cap plate 115.

In the vent portion 160, a direction that faces toward the no-break portion 162 from the break portion 164 may be set to face toward the center of the cap plate 115. That is, in the vent portion 160, a direction that faces toward the break portion 164 from the no-break portion 162, that is a gas discharge direction G, is set toward an outer side of the cap plate 116 as shown in (b) of FIG. 6, and accordingly, the gas does not flow toward the electrode terminal 130.

Accordingly, deterioration of the electrode terminal 130 due to the gas emitted from the vent portion 160 can be prevented, and this may be advantageous in gas flow management and layout design, for example, a control module can be disposed at a center side of the battery module 200 because the gas emitted from the vent portion 160 can be discharged to the outside of the battery module 160 by moving the gas at the opposite ends of the rechargeable battery 100.

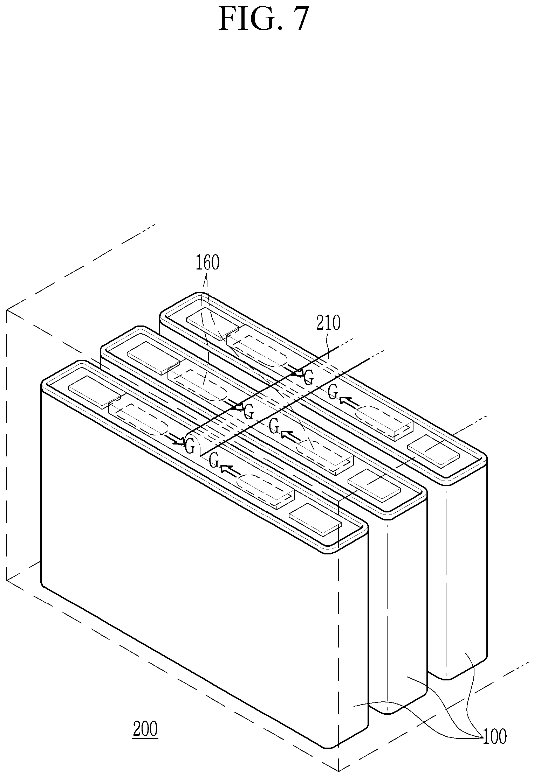

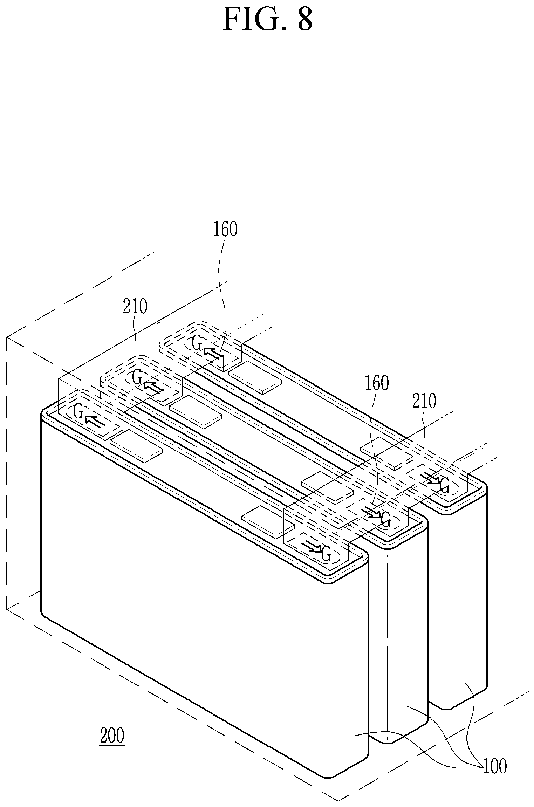

Referring to FIG. 7 and FIG. 8, a battery module 200 according to an exemplary embodiment of the present invention is illustrated. As shown in FIG. 7, a battery module 200 according to an exemplary embodiment of the present invention includes a plurality of rechargeable batteries 100, each of which includes a cap plate 115 combined to one side of a case 110 that receives an electrode assembly 120 and in which a plurality of vent portions 160 are provided in the cap plate 115 along a length direction X, and a vent line 210 that extends along an alignment direction of the rechargeable batteries 110 and through which a gas discharged from the plurality of vent portions 160 is introduced.

Referring to FIG. 7, the above-described rechargeable battery 100 may be provided in plural in the battery module 200 according to the exemplary embodiment of the present invention. In the description of the rechargeable battery 100, contents that are the same as the above-described contents will not be further described.

An exact number of the plurality of rechargeable batteries 100 provided in the battery module 200 may be variously determined depending on the use of the battery module 200 or required power, and the plurality of rechargeable batteries 100 are connected in series or in parallel with each other.

The rechargeable batteries 100 may be arranged in various manners, and, preferably, they may be arranged in a row along a width direction Y of the cap plate 115 as shown in FIG. 7.

In the battery module 200 according to the exemplary embodiment of the present invention, a gas discharged from the plurality of vent portions 160 provided in the rechargeable batteries 100 is introduced into the vent line 210 provided in the battery module 200 and then discharged to the outside of the battery module 200.

Accordingly, although the plurality of vent portions 160 are provided in each of the rechargeable batteries 100 of the battery module 200, the gas can be effectively discharged to the outside of the battery module 200 even through a single or smaller number of vent lines 210 than the number of vent portions 160.

Meanwhile, as shown in FIG. 7, in the battery module 200 according to the exemplary embodiment of the present invention, an electrode terminal 130 is provided as a pair in each of the rechargeable batteries 100 and disposed in each of opposite ends of the cap plate 115, and the vent portion 160 includes a break portion 164 in which a first notch that is ruptured by internal pressure of the case 110 is formed and a no-break portion 162 connected with the break portion 164 and disposed between the pair of electrode terminals 130. A direction toward the break portion 164 from the no-break portion 162 is set toward the vent line 210, and the vent line 210 may be disposed to pass through a center of the cap plate 115.

Specifically, each rechargeable battery 100 of the battery module 200 may correspond to the rechargeable battery 100 shown in (c) of FIG. 6, and the battery module 200 may be provided with a module case that receives the plurality of rechargeable batteries 100. A cap plate 115 and a vent module 160 of each rechargeable battery 100 may be provided in an upper portion of the rechargeable battery 100, and a vent line 210 is provided in an upper portion of the module case and thus may be disposed at an upper side of the plurality of rechargeable batteries 100.

The vent line 210 may be provided as a hollow type of pipe through which a gas flows, and may extend in an alignment direction of the plurality of rechargeable batteries 100.

In the exemplary embodiment shown in FIG. 7, the vent portion 160 of each rechargeable battery 100 is disposed between a pair of electrode terminals 130, and a gas discharge direction G that faces toward the break portion 164 from the no-break portion 162 may be set to face a center of the cap plate 115.

Meanwhile, the vent line 210 may be disposed at an upper center portion of the cap plate 115 in each rechargeable battery 110 in the upper portion of the module case of the battery module 200, and a gas discharged from the plurality of vent portions 160 may be introduced into the vent line 210 and thus discharged to the outside of the battery module 200.

The vent line 210 may be preferably provided as a single vent line 210, but may be provided in plural depending on capacity of each of the rechargeable batteries 100 or the number of vent portions 160. The vent line 210 may include an extension portion that extends along the alignment direction of the rechargeable batteries 100, and a cover portion that protrudes from the extension portion and is disposed in an upper side of the vent portions 160 of each rechargeable battery 100 such that a gas is introduced therein.

The extension portion and the cover portion may be provided with various shapes, and the cover portion extends to protrude along the length direction X of the cap plate 115 of each rechargeable battery 100 from the extension portion to cover the plurality of vent portions 160 provided in one of the rechargeable batteries 100. Accordingly, a gas discharged from a plurality of vent portions 160 provided in any one of the rechargeable batteries 100 may be introduced into the extension portion via the inside of any one of the cover portions.

As described, in the battery module 200 according to the exemplary embodiment of the present invention, even though a plurality of vent portions 160 are formed in each of the plurality of rechargeable batteries 100 as shown in FIG. 7, configurations of the vent line 210 and related elements for discharging a gas to the outside of the battery module 200 can be minimized, while effectively discharging the gas, and accordingly it may be advantageous in design of the battery module 200.

FIG. 8 illustrates a battery module 200 according to another exemplary embodiment of the present invention. As shown in FIG. 8, in the battery module 200 according to the present exemplary embodiment, an electrode terminal of each rechargeable battery 100 is provided as a pair and thus disposed at opposite ends of a cap plate 115, and a vent portion 160 includes a break portion 164 where a first notch ruptured by an internal pressure is formed and a no-break portion 162 connected with the break portion 164. The vent portion 160 may be disposed further away from the center of the cap plate 115 than the pair of the electrode terminal 130, and a direction that faces toward the break portion 164 from the no-break portion 162 is set to face toward the vent line 120, and the vent line 210 is provided at each of the opposite ends of the cap plate 115 and may be disposed farther away from a center of the cap plate 115 than the pair of the electrode terminals 130.

Each rechargeable battery of the battery module 200 may correspond to the rechargeable battery 100 shown in (b) of FIG. 6, and the vent lines 210 of the battery module 200 may be preferably provided as a pair and respectively provided at opposite ends of the cap plate 115 in an upper portion of a module case.

The vent lines 210 may be preferably provided as single objects at the opposite ends of the cap plate 115, respectively, but the vent line 210 may be provided in plural in each of the opposite ends of the cat plate 115 depending on capacity of each rechargeable battery 100 or the number of the vent portions 160. Each vent line 210 may include an extension portion extending in an alignment direction of the rechargeable batteries 100, and a cover portion that protrudes from the extension portion and is disposed at an upper portion of the vent portion 160 of each rechargeable battery 100 such that a gas is introduced therein.

A cover portion extended from any one vent line 210 may protrude downward from the extension portion to cover vent portions 160 disposed in a lower portion of each rechargeable battery. That is, the cover portion may be provided in plural in each vent line 210 to cover the vent portion 160 disposed in the lower portion of the vent line 210.

A battery module 200 may be provided with a control module for managing operation of the battery module 200 while sensing a voltage state, a temperature, and an abnormal condition of the plurality of rechargeable batteries 100, and in case of the battery module 200 according to the exemplary embodiment shown in FIG. 8, the control module is disposed at a center portion of an upper portion of the module case and the vent lines 210 may be disposed at opposite sides of the control module such that it may be advantageous in space utilization and design.

That is, in the exemplary embodiment of the present invention shown in FIG. 8, the control module is disposed at the center of the module case to effectively manage the plurality of rechargeable batteries 100, and the pair of vent lines 210 are provided not only to prevent deterioration of the electrode terminals 130 but also to effectively discharge a gas from the plurality of rechargeable batteries 100 to the outside of the battery module 200.

While this invention has been described in connection with what is presently considered to be practical exemplary embodiments, it is to be understood that the invention is not limited to the disclosed embodiments. On the contrary, it is intended to cover various modifications and equivalent arrangements included within the scope of the appended claims.

### <Description of symbols>

| | | | |
|---|---|---|---|
| 100: | rechargeable battery | 110: | case |
| 115: | cap plate | 120: | electrode assembly |
| 130: | electrode terminal | 160: | vent portion |
| 162: | no-break portion | 164: | break portion |
| 200: | battery module | 210: | vent line |

## Claims

1. A rechargeable battery (100) comprising:
an electrode assembly (120) that includes a first electrode, a second electrode, and a separator;
a case (110) where the electrode assembly (120) is accommodated, and including one opened side;
a cap plate (115) that is combined to the one opened side of the case (110), and includes a plurality of vent portions (160) that are ruptured by an internal pressure of the case (110); and
an electrode terminal (130) that protrudes from the cap plate (115) and is electrically connected with the electrode assembly (120),
wherein each vent portion (160) comprises:
a break portion (164) in which a first notch that is ruptured by the internal pressure is formed; and
a no-break portion (162) that is connected with the break portion (164), and
wherein the break portion (164) is ruptured and a gas is discharged to a direction that faces toward the break portion (164) from the no-break portion (162) in each vent portion (160),
wherein, in the vent portion (160), a gas discharge direction (G) that faces toward the break portion (164) from the no-break portion (162) is set to avoid the electrode terminal (130),
wherein the electrode terminal (130) is provided as a pair and respectively disposed at opposite ends of the cap plate (115),
wherein the plurality of vent portions (160) are disposed between the pair of electrode terminals (130) and the gas discharge direction (G) that faces toward the break portion (164) from the no-break portion (162) is set to face a center of the cap plate (115) in each vent portion (160),
wherein the plurality of vent portions (160) are provided as at least a pair and respectively disposed adjacent to the electrode terminals.

2. The rechargeable battery of claim 1, wherein a second notch that is straight-lined and connected with the first notch is formed with a depth that is smaller than that of the first notch in the no-break portion (162), and
the second notch becomes a rotation shaft of the break portion (164) when the first notch is ruptured.

3. The rechargeable battery (100) of claim 1, wherein the electrode terminal (130) is provided as a pair and respectively disposed at opposite ends of the cap plate (115),
the plurality of vent portions (160) are disposed further away from a center of the cap plate (115) than the pair of electrode terminals (130), and the gas discharge direction that faces toward the break portion (164) from the no-break portion (164) is set to face away from the electrode terminals (130).

4. A battery module (200) comprising:
a plurality of rechargeable batteries (100) according to any of claims 1 to 3; and
a vent line (210) extends along an alignment direction of the plurality of rechargeable batteries (100), and into which a gas emitted from the plurality of vent portions (160) is introduced.

5. The battery module (200) of claim 4, wherein
the vent line (210) is disposed to pass through a center side of the cap plate (115).

## Patentansprüche

1. Wiederaufladbare Batterie (100), umfassend:
eine Elektrodenanordnung (120), die eine erste Elektrode, eine zweite Elektrode und einen Separator umfasst;
ein Gehäuse (110), in dem die Elektrodenanordnung (120) untergebracht ist und das eine offene Seite umfasst;
eine Abdeckplatte (115), die mit der einen offenen Seite des Gehäuses (110) verbunden ist und mehrere Entlüftungsabschnitte (160) umfasst, die durch den Innendruck des Gehäuses (110) gebrochen werden; und
einen Elektrodenanschluss (130), der von der Abdeckplatte (115) vorsteht und elektrisch mit der Elektrodenanordnung (120) verbunden ist,
wobei jeder Entlüftungsabschnitt (160) Folgendes umfasst:
einen Bruchabschnitt (164), in dem eine erste Kerbe ausgebildet ist, die durch den Innendruck gebrochen wird; und
einen Nicht-Bruchabschnitt (162), der mit dem Bruchabschnitt (164) verbunden ist, und
wobei der Bruchabschnitt (164) gebrochen wird und ein Gas aus dem Nicht-Bruchabschnitt (162) in jedem Entlüftungsabschnitt (160) in eine Richtung ausströmt, die zum Bruchabschnitt (164) zeigt,
wobei in dem Entlüftungsabschnitt (160) eine Gasausströmungsrichtung (G), die vom Nicht-Bruchabschnitt (162) zum Bruchabschnitt (164) zeigt, so eingestellt ist, dass sie den Elektrodenanschluss (130) umgeht,
wobei der Elektrodenanschluss (130) als Paar vorgesehen ist und jeweils an gegenüberliegenden Enden der Abdeckplatte (115) angeordnet ist,
wobei die mehreren Entlüftungsabschnitte (160) zwischen dem Paar von Elektrodenanschlüssen (130) angeordnet sind und die Gasausströmungsrichtung (G), die vom Nicht-Bruchabschnitt (162) zum Bruchabschnitt (164) zeigt, so eingestellt ist, dass sie in jedem Entlüftungsabschnitt (160) zur Mitte der Abdeckplatte (115) zeigt,
wobei die mehreren Entlüftungsabschnitte (160) als mindestens ein Paar vorgesehen und jeweils benachbart zu den Elektrodenanschlüssen angeordnet sind.

2. Wiederaufladbare Batterie nach Anspruch 1, wobei eine zweite Kerbe, die geradlinig ist und mit der ersten Kerbe verbunden ist, mit einer Tiefe ausgebildet ist, die kleiner ist als die der ersten Kerbe im Nicht-Bruchabschnitt (162), und
wobei die zweite Kerbe zu einer Drehachse des Bruchabschnitt (164) wird, wenn die erste Kerbe gebrochen wird.

3. Wiederaufladbare Batterie (100) nach Anspruch 1, wobei der Elektrodenanschluss (130) als Paar vorgesehen und jeweils an gegenüberliegenden Enden der Abdeckplatte (115) angeordnet ist,
wobei die mehreren Entlüftungsabschnitte (160) weiter von einer Mitte der Abdeckplatte (115) entfernt angeordnet sind als das Paar von Elektrodenanschlüssen (130), und wobei die Gasausströmungsrichtung, die vom Nicht-Bruchabschnitt (164) zum Bruchabschnitt (164) zeigt, so eingestellt ist, dass sie von den Elektrodenanschlüssen (130) weg zeigt.

4. Batteriemodul (200), umfassend:
mehrere wiederaufladbare Batterien (100) nach einem der Ansprüche 1 bis 3; und
eine Entlüftungsleitung (210), die sich entlang einer Ausrichtungsrichtung der mehreren wiederaufladbaren Batterien (100) erstreckt und in die ein aus den mehreren Entlüftungsabschnitten (160) austretendes Gas eingeleitet wird.

5. Batteriemodul (200) nach Anspruch 4, wobei
die Entlüftungsleitung (210) so angeordnet ist, dass sie durch eine Mittelseite der Abdeckplatte (115) verläuft.

## Revendications

1. Batterie rechargeable (100) comportant :
un ensemble d'électrodes (120) qui inclut une première électrode, une seconde électrode et un séparateur ;
un boîtier (110) dans lequel l'ensemble d'électrodes (120) est logé, et incluant un côté ouvert ;
une plaque de recouvrement (115) qui est combinée au côté ouvert du boîtier (110), et inclut une pluralité de parties de ventilation (160) qui sont rompues par une pression interne du boîtier (110) ; et
une borne d'électrode (130) qui fait saillie à partir de la plaque de recouvrement (115) et est connectée électriquement à l'ensemble d'électrodes (120),
dans laquelle chaque partie de ventilation (160) comporte :
une partie cassable (164) dans laquelle une première encoche qui est rompue par la pression interne est formée ; et
une partie non cassable (162) qui est connectée à la partie cassable (164), et
dans laquelle la partie cassable (164) est rompue et un gaz est déchargé dans une direction qui est orientée vers la partie cassable (164) à partir de la partie non cassable (162) dans chaque partie de ventilation (160),
dans laquelle, dans la partie de ventilation (160), une direction de décharge de gaz (G) qui est orientée vers la partie cassable (164) à partir de la partie non cassable (162) est réglée pour éviter la borne d'électrode (130),
dans laquelle la borne d'électrode (130) est prévue en tant que paire et disposée respectivement à des extrémités opposées de la plaque de recouvrement (115),
dans laquelle la pluralité de parties de ventilation (160) sont disposées entre la paire de bornes d'électrode (130) et la direction de décharge de gaz (G) qui est orientée vers la partie cassable (164) à partir de la partie non cassable (162) est réglée pour faire face à un centre de la plaque de recouvrement (115) dans chaque partie de ventilation (160),
dans laquelle la pluralité de parties de ventilation (160) sont prévues sous la forme d'au moins une paire et respectivement disposées adjacentes aux bornes d'électrode.

2. Batterie rechargeable selon la revendication 1, dans laquelle une seconde encoche qui est rectiligne et connectée à la première encoche est formée avec une profondeur qui est inférieure à celle de la première encoche dans la partie non cassable (162), et
la seconde encoche devient un arbre de rotation de la partie cassable (164) lorsque la première encoche est rompue.

3. Batterie rechargeable (100) selon la revendication 1, dans laquelle la borne d'électrode (130) est prévue sous la forme d'une paire et disposée respectivement à des extrémités opposées de la plaque de recouvrement (115),
la pluralité de parties de ventilation (160) sont disposées plus éloignées d'un centre de la plaque de recouvrement (115) que la paire de bornes d'électrode (130), et la direction de décharge de gaz qui est orientée vers la partie cassable (164) à partir de la partie non cassable (164) est réglée pour être orientée à l'opposé des bornes d'électrode (130).

4. Module de batterie (200) comportant :
une pluralité de batteries rechargeables (100) selon l'une quelconque des revendications 1 à 3 ; et
une conduite de ventilation (210) qui s'étend le long d'une direction d'alignement de la pluralité de batteries rechargeables (100), et dans laquelle un gaz émis à partir de la pluralité de parties de ventilation (160) est introduit.

5. Module de batterie (200) selon la revendication 4, dans lequel
la conduite de ventilation (210) est disposée pour passer à travers un côté central de la plaque de recouvrement (115).
